(19) Europäisches Patentamt

European Patent Office

Office européen des brevets

(11) **EP 4 299 600 A1**

(12) **EUROPEAN PATENT APPLICATION**
published in accordance with Art. 153(4) EPC

(43) Date of publication:
**03.01.2024 Bulletin 2024/01**

(21) Application number: **22759261.5**

(22) Date of filing: **31.01.2022**

(51) International Patent Classification (IPC):
**C08F 8/00** *(2006.01)*      **C08F 214/26** *(2006.01)*
**H01B 7/02** *(2006.01)*

(52) Cooperative Patent Classification (CPC):
**C08F 8/00; C08F 214/26; H01B 7/02**

(86) International application number:
**PCT/JP2022/003634**

(87) International publication number:
**WO 2022/181220 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.02.2021 JP 2021031086**
                **30.09.2021 JP 2021162113**

(71) Applicant: **DAIKIN INDUSTRIES, LTD.**
**Osaka-Shi, Osaka 530-0001 (JP)**

(72) Inventors:
• **ISAKA, Tadaharu**
  **Osaka-shi, Osaka 530-0001 (JP)**
• **ZENKE, Yumi**
  **Osaka-shi, Osaka 530-0001 (JP)**
• **YAMAMOTO, Yukari**
  **Osaka-shi, Osaka 530-0001 (JP)**
• **TSUDA, Hayato**
  **Osaka-shi, Osaka 530-0001 (JP)**
• **HIGUCHI, Tatsuya**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

(54) **COPOLYMER, MOLDED BODY, INJECTION MOLDED BODY, AND COATED ELECTRICAL WIRE**

(57) There is provided a copolymer containing tetrafluoroethylene unit and perfluoro(propyl vinyl ether) unit, wherein the copolymer has a content of perfluoro(propyl vinyl ether) unit of 3.9 to 4.9% by mass with respect to the whole of the monomer units, a melt flow rate at 372°C of 4.0 to 9.0 g/10 min, and the number of functional groups of 40 or less per $10^6$ main-chain carbon atoms.

EP 4 299 600 A1

**Description**

TECHNICAL FIELD

The present disclosure relates to a copolymer, a formed article, an injection molded article, and a coated electric wire.

BACKGROUND ART

In Patent Document 1, a forming material for an ozone-resistant article is described which comprises a copolymer (A) and having a melt flow rate of 0.1 to 50 g/10 min, wherein the copolymer (A) is a copolymer comprising tetrafluoroethylene and perfluorovinylether, and has no less than 3.5% by mass of a perfluorovinylether unit, a melting point of 295°C or higher, and 50 or more unstable terminal groups per $1 \times 10^6$ carbon atoms in the copolymer (A).

In Patent Document 2, melt extruded cubes of a melt-fabricable TFE copolymer having 80 or less unstable terminal groups per $10^6$ carbon atoms are described, wherein at least about 80% by weight of the cubes is in the size range of about 200 to about 1,200 $\mu$m.

RELATED ART

PATENT DOCUMENTS

Patent Document 1: International Publication No. WO 2003/048214
Patent Document 2: Japanese Translation of PCT International Application Publication No. 2003-534940

SUMMARY OF THE INVENTION

PROBLEM TO BE SOLVED BY THE INVENTION

An object of the present disclosure is to provide a copolymer that is capable of providing a visually attractive injection molded article by being formed by injection molding, that hardly corrodes a metal mold to be used in molding and a core wire coated therewith, that is capable of creating an extremely thick coating layer having a uniform thickness on a core wire having an extremely large diameter by extrusion forming, and that is capable of providing a formed article which has excellent abrasion resistance, nitrogen low permeability, chemical solution low permeability, water vapor low permeability, 110°C high-temperature rigidity, high-temperature tensile creep properties, resistance to deterioration by repetitive load, extremely long-term ozone resistance, sealability at high temperatures, and non-stickiness, and which hardly makes fluorine ions to dissolve out in an electrolytic solution.

MEANS FOR SOLVING THE PROBLEM

According to the present disclosure, there is provided a copolymer containing tetrafluoroethylene unit and perfluoro(propyl vinyl ether) unit, wherein the copolymer has a content of perfluoro(propyl vinyl ether) unit of 3.9 to 4.9% by mass with respect to the whole of the monomer units, a melt flow rate at 372°C of 4.0 to 9.0 g/10 min, and the number of functional groups of 40 or less per $10^6$ main-chain carbon atoms.

The copolymer of the present disclosure preferably has a melt flow rate at 372°C of 5.0 to 9.0 g/10 min.

According to the present disclosure, an injection molded article comprising the copolymer is further provided.

According to the present disclosure, a coated electric wire having a coating layer comprising the copolymer is further provided.

According to the present disclosure, a formed article comprising the copolymer, wherein the formed article is a joint, a film, a bottle, a gasket, an electric wire coating, or a tube is further provided.

EFFECTS OF INVENTION

According to the present disclosure, there can be provided a copolymer that is capable of providing a visually attractive injection molded article by being formed by injection molding, that hardly corrodes a metal mold to be used in molding and a core wire coated therewith, that is capable of creating an extremely thick coating layer having a uniform thickness on a core wire having an extremely large diameter by extrusion forming, and that is capable of providing a formed article which has excellent abrasion resistance, nitrogen low permeability, chemical solution low permeability, water vapor low permeability, 110°C high-temperature rigidity, high-temperature tensile creep properties, resistance to deterioration by repetitive load, extremely long-term ozone resistance, sealability at high temperatures, and non-stickiness, and which hardly makes fluorine ions to dissolve out in an electrolytic solution.

DESCRIPTION OF EMBODIMENTS

Hereinafter, specific embodiments of the present disclosure will now be described in detail, but the present disclosure is not limited to the following embodiments.

The copolymer of the present disclosure contains tetrafluoroethylene (TFE) unit and perfluoro(propyl vinyl ether) (PPVE) unit.

The copolymer (PFA) containing TFE unit and PPVE unit is used as a material for forming a piping member used to transfer a fluid, such as a pipe, a joint, a gasket, and a packing. A piping member made of PFA is used to, for example, transfer a fluid having a temperature exceeding 100°C, or to transfer a chemical solution that should not be mixed with moisture such as water vapor in outside air. Accordingly, a demand exists for a material capable of providing a formed article having excellent chemical solution low permeability, high-temperature rigidity, high-temperature tensile creep properties, sealability at high temperatures, and water vapor low permeability. Moreover, when being repeatedly attached and detached, a joint is likely damaged due to abrasion and, accordingly, a demand exists for a material capable of providing a formed article having excellent resistance to deterioration by repetitive load and abrasion resistance.

In Patent Document 1, the forming material for an ozone-resistant article having the above characteristics is described as being a forming material having excellent ozone resistance while maintaining the chemical resistance, heat resistance and mechanical properties of fluororesin. Recently, a demand exists for a forming material having better properties than the forming material for an ozone-resistant article described in Patent Document 1 and, in particular, a demand exists for a material capable of providing a formed article having excellent abrasion resistance, nitrogen low permeability, chemical solution low permeability, high-temperature rigidity, high-temperature tensile creep properties, and resistance to deterioration by repetitive load, extremely long-term ozone resistance, and improved sealability at high temperatures and water vapor low permeability. On the other hand, attempts to improve sealability at high temperatures and water vapor low permeability result in problems such as poor abrasion resistance and ozone resistance.

It has been found that by suitably regulating the content of PPVE unit, the melt flow rate (MFR), and the number of functional groups of a copolymer containing TFE unit and PPVE unit, the moldability of the copolymer is significantly enhanced and, at the same time, a metal mold to be used in molding is hardly corroded. Further, it has been also found that the use of such a copolymer provides a formed article that has excellent abrasion resistance, nitrogen low permeability, chemical solution low permeability, water vapor low permeability, 110°C high-temperature rigidity, high-temperature tensile creep properties, resistance to deterioration by repetitive load, extremely long-term ozone resistance, sealability at high temperatures, and non-stickiness, and that also hardly makes fluorine ions to dissolve out in an electrolytic solution.

In addition, by forming the copolymer of the present disclosure by extrusion forming, an extremely thick coating layer having a uniform thickness can be formed on a core wire having an extremely large diameter. Moreover, the obtained coating layer hardly corrodes the core wire. Thus, the copolymer of the present disclosure can be utilized not only as a material of a piping member, but also in a broad range of applications such as electric wire coating.

The copolymer of the present disclosure is a melt-fabricable fluororesin. The being melt-fabricable means that it is possible to melt and process a polymer by using a conventional processing device such as an extruder or an injection molding machine.

The content of PPVE unit of the copolymer is 3.9 to 4.9% by mass with respect to the whole of the monomer units. The content of PPVE unit of the copolymer is preferably 4.0% by mass or higher and more preferably 4.1% by mass or higher, and is preferably 4.8% by mass or lower, more preferably 4.7% by mass or lower, still more preferably 4.6% by mass or lower, further still more preferably 4.5% by mass or lower, especially preferably 4.4% by mass or lower, and most preferably 4.3% by mass or lower. An excessively large content of PPVE unit of the copolymer results in poor sealability at high temperatures, poor water vapor low permeability, poor nitrogen low permeability, poor chemical solution low permeability, and poor 110°C high-temperature rigidity. An excessively small content of PPVE unit of the copolymer makes it difficult to obtain a formed article having excellent resistance to deterioration by repetitive load and excellent extremely long-term ozone resistance.

The content of TFE unit of the copolymer is, with respect to the whole of the monomer units, preferably 95.1 to 96.1% by mass, more preferably 95.2% by mass or higher, still more preferably 95.3% by mass or higher, further still more preferably 95.4% by mass or higher, further especially preferably 95.5% by mass or higher, especially preferably 95.6% by mass or higher, and most preferably 95.7% by mass or higher, and is more preferably 96.0% by mass or lower and still more preferably 95.9% by mass or lower. An excessively small content of TFE unit of the copolymer possibly results in poor sealability at high temperatures, poor water vapor low permeability, poor nitrogen low permeability, poor chemical solution low permeability, and poor 110°C high-temperature rigidity. An excessively large content of TFE unit of the copolymer tends to make it difficult to obtain a formed article having excellent resistance to deterioration by repetitive load and excellent extremely long-term ozone resistance.

In the present disclosure, the content of each monomer unit in the copolymer is measured by a $^{19}$F-NMR method.

The copolymer can also contain a monomer unit originated from a monomer that is copolymerizable with TFE and PPVE. In this case, the content of the monomer unit copolymerizable with TFE and PPVE is, with respect to the whole of the monomer units of the copolymer, preferably 0 to 1.2% by mass, more preferably 0.05 to 1.0% by mass, and still more preferably 0.1 to 0.7% by mass.

The monomers copolymerizable with TFE and PPVE may include hexafluoropropylene (HFP), vinyl monomers represented by $CZ^1Z^2=CZ^3(CF_2)_nZ^4$ wherein $Z^1$, $Z^2$ and $Z^3$ are identical or different, and represent H or F; $Z^4$ represents H, F or Cl; and n represents an integer of 2 to 10, perfluoro(alkyl vinyl ether) [PAVE] represented by $CF_2=CF-ORf^1$ wherein $Rf^1$ is a perfluoroalkyl group having 1 to 8 carbon atoms (excluding PPVE), and alkyl perfluorovinyl ether derivatives represented by $CF_2=CF-OCH_2-Rf^1$ wherein $Rf^1$ represents a perfluoroalkyl group having 1 to 5 carbon atoms. Among these, HFP is preferred.

The copolymer is preferably at least one selected from the group consisting of a copolymer consisting only of the TFE unit and the PPVE unit, and a TFE/HFP/PPVE copolymer, and is more preferably a copolymer consisting only of a TFE unit and a PPVE unit.

The copolymer has a melt flow rate (MFR) of 4.0 to 9.0 g/10 min. The MFR of the copolymer is preferably 4.1 g/10 min or higher, more preferably 4.5 g/10 min or higher, still more preferably 5.0 g/10 min or higher, especially preferably 6.0 g/10 min or higher, and most preferably 7.0 g/10 min or higher, and is preferably 8.0 g/10 min or lower, more preferably 7.5 g/10 min or lower, and still more preferably 7.4 g/10 min or lower. Due to that the MFR of the copolymer is in the above range, the moldability of the copolymer is enhanced, and a formed article can be obtained that has excellent abrasion resistance, nitrogen low permeability, chemical solution low permeability, water vapor low permeability, 110°C high-temperature rigidity, high-temperature tensile creep properties, resistance to deterioration by repetitive load, extremely long-term ozone resistance, sealability at high temperatures, and non-stickiness. An excessively high MFR makes it difficult to obtain a formed article having excellent abrasion resistance and excellent extremely long-term ozone resistance. An excessively low MFR tends to result in poor nitrogen low permeability, poor chemical solution low permeability, and poor 110°C high-temperature rigidity of the formed article.

Due to that the content of PPVE unit, the melt flow rate (MFR), and the number of functional groups of the copolymer containing TFE unit and PPVE unit are suitably regulated, the copolymer of the present disclosure can be formed by injection molding and also can be formed by extrusion forming for electric wire coating. While a copolymer that becomes sufficiently flowable by being heated is suitable for injection molding, an attempt to form a coating layer on an electric wire by extrusion forming using a copolymer having an excessively high flowability at high temperatures may result in a large variety of outer diameters. Even when the copolymer of the present disclosure is formed by injection molding, a visually attractive injection-molded article can be obtained, and even when the copolymer of the present disclosure is formed by extrusion forming, a coated electric wire, the variation in the outer diameter of which is small, can be obtained.

In the present disclosure, the MFR is a value obtained as a mass (g/10 min) of the polymer flowing out from a nozzle of 2.1 mm in inner diameter and 8 mm in length per 10 min at 372°C under a load of 5 kg using a melt indexer, according to ASTM D1238.

The MFR can be regulated by regulating the kind and amount of a polymerization initiator to be used in polymerization of monomers, the kind and amount of a chain transfer agent, and the like.

In the present disclosure, the number of functional groups per $10^6$ main-chain carbon atoms of the copolymer is 40 or less. The number of functional groups per $10^6$ main-chain carbon atoms of the copolymer is preferably 30 or less, more preferably 20 or less, still more preferably 15 or less, further still more preferably 10 or less, and especially preferably less than 6. Due to that the number of functional groups of the copolymer is in the above range, a metal mold is hardly corroded during forming involving the metal mold, and a core wire is hardly corroded when the copolymer is used as an electric wire coating. Moreover, a formed article can be obtained that has excellent extremely long-term ozone resistance, nitrogen low permeability, chemical solution low permeability, 110°C high-temperature rigidity, and non-stickiness, and that hardly makes fluorine ions to dissolve out in an electrolytic solution. In particular, by suitably regulating the content of PPVE unit, the melt flow rate (MFR), and the number of functional groups of the copolymer containing TFE unit and PPVE unit, a formed article exhibiting excellent low permeability to various chemical solutions such as dimethyl carbonate and ethyl acetate can be obtained.

For identification of the kind of functional groups and measurement of the number of the functional groups, infrared spectroscopy can be used.

The number of the functional groups is measured, specifically, by the following method. First, the copolymer is formed by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of functional groups per $1\times10^6$ carbon atoms in the copolymer is calculated according to the following formula (A).

$$N = I \times K/t \cdots (A)$$

I: absorbance
K: correction factor
t: thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

[Table 1]

Table 1

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Absorption frequencies of -CH$_2$CF$_2$H, -CH$_2$COF, -CH$_2$COOH, -CH$_2$COOCH$_3$ and -CH$_2$CONH$_2$ are lower by a few tens of kaysers (cm$^{-1}$) than those of -CF$_2$H, -COF, -COOH free and -COOH bonded, -COOCH$_3$ and -CONH$_2$ shown in the Table, respectively.

For example, the number of functional groups -COF is the total of the number of a functional group determined from an absorption peak having an absorption frequency of 1,883 cm$^{-1}$ derived from -CF$_2$COF and the number of a functional group determined from an absorption peak having an absorption frequency of 1,840 cm$^{-1}$ derived from -CH$_2$COF.

The functional groups are ones present on main chain terminals or side chain terminals of the copolymer, and ones present in the main chain or the side chains. The number of functional groups may be the total number of -CF=CF$_2$, -CF$_2$H, - COF, -COOH, -COOCH$_3$, -CONH$_2$ and -CH$_2$OH.

The functional groups are introduced to the copolymer by, for example, a chain transfer agent or a polymerization initiator used for production of the copolymer. For example, in the case of using an alcohol as the chain transfer agent, or a peroxide having a structure of -CH$_2$OH as a polymerization initiator, -CH$_2$OH is introduced on the main chain terminals of the copolymer. Alternatively, the functional group is introduced on the side chain terminal of the copolymer by polymerizing a monomer having the functional group.

The copolymer satisfying the above range regarding the number of functional groups can be obtained by subjecting the copolymer to a fluorination treatment. That is, the copolymer of the present disclosure is preferably one which is subjected to the fluorination treatment. Further, the copolymer of the present disclosure preferably has -CF$_3$ terminal groups.

The melting point of the copolymer is preferably 295 to 315°C, more preferably 298°C or higher, still more preferably 300°C or higher, especially preferably 301°C or higher, and most preferably 302°C or higher, and is more preferably 310°C or lower. Due to that the melting point is in the above range, there can be obtained the copolymer giving formed articles better in sealability particularly at high temperatures.

In the present disclosure, the melting point can be measured by using a differential scanning calorimeter [DSC].

The water vapor permeability of the copolymer is preferably 14.0 $g \cdot cm/m^2$ or lower, more preferably 13.5 $g \cdot cm/m^2$ or lower, and still more preferably 13.0 $g \cdot cm/m^2$ or lower. Due to that the content of PPVE unit, the melt flow rate (MFR), and the number of functional groups of the copolymer containing TFE unit and PPVE unit are suitably regulated, the copolymer of the present disclosure has excellent water vapor low permeability. Hence, a formed article containing the copolymer of the present disclosure, when used as a piping member (such as a pipe, a joint, a gasket, or a packing) for feeding a chemical solution that should not be mixed with moisture, can suppress water vapor from permeating into the piping member and can suppress moisture from entering the chemical solution. Also, by using a formed article containing the copolymer of the present disclosure as, for example, a member to be compressed of a secondary battery, the infiltration of moisture can effectively be prevented even under a high-temperature, high-humidity condition.

In the present disclosure, the water vapor permeability can be measured under the condition having a temperature of 95°C and for 30 days. Specific measurement of the water vapor permeability can be carried out by a method described in Examples.

The electrolytic solution permeability of the copolymer is preferably 7.9 $g \cdot cm/m^2$ or lower, and more preferably 7.7 $g \cdot cm/m^2$ or lower. Due to that the content of PPVE unit, the melt flow rate (MFR), and the number of functional groups of the copolymer containing the TFE unit and the PPVE unit are suitably regulated, the copolymer of the present disclosure has excellent electrolytic solution low permeability. That is, by using the copolymer of the present disclosure, a formed article that hardly makes a chemical solution such as an electrolytic solution to permeate can be obtained and, therefore, for example, a piping member and a flow meter member obtained with the copolymer of the present disclosure can suitably be used to transfer a chemical solution such as an electrolytic solution.

In the present disclosure, the electrolytic solution permeability can be measured under the condition having a temperature of 60°C and for 30 days. Specific measurement of the electrolytic solution permeability can be carried out by a method described in Examples.

The ethyl acetate permeability of the copolymer is preferably 7.0 $g \cdot cm/m^2$ or less. Due to that the content of PPVE unit, the melt flow rate (MFR), and the number of functional groups of the copolymer containing TFE unit and PPVE unit are suitably regulated, the copolymer of the present disclosure has excellent low ethyl acetate permeability. That is, by using the copolymer of the present disclosure, a formed article that hardly makes a chemical solution such as ethyl acetate to permeate can be obtained.

In the present disclosure, the ethyl acetate permeability can be measured under the condition having a temperature of 60°C and for 45 days. Specific measurement of the ethyl acetate permeability can be carried out by a method described in Examples.

The nitrogen permeability coefficient of the copolymer is preferably 330 $cm^3 \cdot mm/m^2 \cdot 24$ h·atm) or less. Due to that the content of PPVE unit, the melt flow rate (MFR), and the number of functional groups of the copolymer containing TFE unit and PPVE unit are suitably regulated, the copolymer of the present disclosure has excellent nitrogen low permeability. Thus, by using the copolymer of the present disclosure, a formed article having excellent gas barrier properties can be obtained.

In the present disclosure, the nitrogen permeability coefficient can be measured under the condition having a test temperature of 70°C and a test humidity of 0% RH. Specific measurement of the nitrogen permeability coefficient can be carried out by a method described in Examples.

In the copolymer of the present disclosure, the amount of fluorine ions dissolving out therefrom detected by an electrolytic solution immersion test is, in terms of mass, preferably 1.0 ppm or lower, more preferably 0.8 ppm or lower, and still more preferably 0.7 ppm or lower. Due to that the amount of fluorine ions dissolving out being is in the above range, the generation of gas such as HF in a non-aqueous electrolyte battery can be further suppressed, and the deterioration and the shortening of the service life of the battery performance of a non-aqueous electrolyte battery can be more suppressed.

In the present disclosure, the electrolytic solution immersion test can be carried out by preparing a test piece of the copolymer having a weight corresponding to that of 10 sheets of formed articles (15 mm × 15 mm × 0.2 mm) of the copolymer, and putting, in a thermostatic chamber of 80°C, a glass-made sample bottle in which the test piece and 2 g of dimethyl carbonate (DMC) and allowing the resultant to stand for 144 hours.

The storage elastic modulus (E') at 150°C of the copolymer is preferably 70 MPa or higher and more preferably 75 MPa or higher, and is preferably 1,000 MPa or lower, more preferably 500 MPa or lower, and still more preferably 300 MPa or lower. Due to that the storage elastic modulus (E') at 150°C is in the above range, there can be obtained the copolymer that giving formed articles which can keep on exhibiting a sufficient rebound resilience also at high temperatures for a long term, and better in sealability at high temperatures can be obtained.

The storage elastic modulus (E') can be measured by carrying out dynamic viscoelasticity measurement under the condition having a temperature-increasing rate of 2°C/min and a frequency of 10 Hz and in the range of 30 to 250°C.

The storage elastic modulus (E') at 150°C can be raised by regulating the content of the PPVE unit and the melt flow rate (MFR) of the copolymer.

The seal pressure at 150°C of the copolymer is preferably 0.45 MPa or higher, more preferably 0.50 MPa or higher, and still more preferably 0.55 MPa or higher; and the upper limit is not limited, but may be 3.00 MPa or lower. The seal pressure at 150°C of the copolymer can be raised by regulating the content of PPVE unit, the melt flow rate (MFR), and the number of functional groups of the copolymer.

Concerning the seal pressure, a test piece obtained from the copolymer is deformed at a compression deformation rate of 50%, allowed to stand as is at 150°C for 18 hours, released from the compressed state, and allowed to stand at room temperature for 30 min, and thereafter, the height of the test piece (height of the test piece after being compressively deformed) is measured; and the seal pressure can be calculated by the following formula using the height of the test piece after being compressively deformed and the storage elastic modulus (MPa) at 150°C:

$$\texttt{Seal pressure at 150°C (MPa)} = (t_2 - t_1)/t_1 \times E'$$

$t_1$: an original height (mm) of a test piece before being compressively deformed $\times$ 50%
$t_2$: a height (mm) of test piece after being compressively deformed
$E'$: Storage elastic modulus (MPa) at 150°C

The copolymer of the present disclosure can be produced by a polymerization method such as suspension polymerization, solution polymerization, emulsion polymerization, or bulk polymerization. The polymerization method is preferably emulsion polymerization or suspension polymerization. In these polymerization methods, conditions such as temperature and pressure, and a polymerization initiator and other additives can be suitably set depending on the composition and the amount of the copolymer.

As the polymerization initiator, an oil-soluble radical polymerization initiator, or a water-soluble radical polymerization initiator may be used.

The oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate, and di-2-ethoxyethyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by [(RfCOO)-]$_2$ wherein Rf is a perfluoroalkyl group, an ω-hydroperfluoroalkyl group, or a fluorochloroalkyl group.

Examples of the di[fluoro(or fluorochloro)acyl] peroxides include di(ω-hydro-dodecafluorohexanoyl) peroxide, di(ω-hydro-tetradecafluoroheptanoyl) peroxide, di(ω-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydrododecafluoroheptanoyl-ω-hydrohexadecafluorononanoyl peroxide, ω-chloro-hexafluorobutyryl-ω-chloro-decafluorohexanoyl peroxide, ω-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorotriacontafluorodocosanoyl) peroxide.

The water-soluble radical polymerization initiator may be a known water-soluble peroxide, and examples thereof include ammonium salts, potassium salts and sodium salts of persulfuric acid, perboric acid, perchloric acid, perphosphoric acid, percarbonic acid and the like, organic peroxides such as disuccinoyl peroxide and diglutaroyl peroxide, and t-butyl permaleate and t-butyl hydroperoxide. A reductant such as a sulfite salt may be combined with a peroxide and used, and the amount thereof to be used may be 0.1 to 20 times with respect to the peroxide.

In the polymerization, a surfactant, a chain transfer agent and a solvent may be used, which are conventionally known.

The surfactant may be a known surfactant, and, for example, nonionic surfactants, anionic surfactants, and cationic surfactants may be used. Among these, fluorine-containing anionic surfactants are preferable, and more preferable are linear or branched fluorine-containing anionic surfactants having 4 to 20 carbon atoms, which may contain an ether bond oxygen (that is, an oxygen atom may be present between carbon atoms). The amount of the surfactant added (based on the polymerization water) is preferably 50 to 5,000 ppm.

Examples of the chain transfer agent include hydrocarbons such as ethane, isopentane, n-hexane, and cyclohexane; aromatics such as toluene and xylene; ketones such as acetone; acetate esters such as ethyl acetate and butyl acetate; alcohols such as methanol and ethanol; mercaptans such as methylmercaptan; and halogenated hydrocarbons such as carbon tetrachloride, chloroform, methylene chloride, and methyl chloride. The amount of the chain transfer agent to be added may vary depending on the chain transfer constant value of the compound to be used, but is usually in the range of 0.01 to 20% by mass with respect to the solvent in the polymerization.

The solvent may include water and mixed solvents of water and an alcohol.

In the suspension polymerization, in addition to water, a fluorosolvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroalkanes such as $CF_2ClCFClCF_2CF_3$ and $CF_3CFClCFClCF_3$; hydrofluoroalkanes such as $CF_3CFHCFHCF_2CF_2CF_3$, $CF_2HCF_2CF_2CF_2H$, and $CF_3CF_2CF_2CF_2CF_2CF_2H$; hydrofluoroethers such as $CH_3OC_2F_5$, $CH_3OC_3F_5CF_3CF_2CH_2OCHF_2$, $CF_3CHFCF_2OCH_3$, $CHF_2CF_2OCH_2F$, $(CF_3)_2CHCF_2OCH_3$, $CF_3CF_2CH_2OCH_2CHF_2$, and $CF_3CHFCF_2OCH_2CF_3$; and perfluoroalkanes such as perfluorocyclobutane, $CF_3CF_2CF_2CF_3$, $CF_3CF_2CF_2CF_2CF_3$, and $CF_3CF_2CF_2CF_2CF_2CF_3$, and, among these, perfluoroalkanes are preferable. The amount of the fluorosolvent to be used is, from the viewpoint of suspendability and economic efficiency, preferably 10 to 100% by mass with respect to an aqueous medium.

The polymerization temperature is not limited, and may be 0 to 100°C. The polymerization pressure is suitably set depending on other polymerization conditions to be used such as the kind, the amount and the vapor pressure of the solvent, and the polymerization temperature, but may usually be 0 to 9.8 MPaG.

In the case of obtaining an aqueous dispersion containing the copolymer by the polymerization reaction, the copolymer can be recovered by coagulating, washing, and drying the copolymer contained in the aqueous dispersion. Then in the case of obtaining the copolymer as a slurry by the polymerization reaction, the copolymer can be recovered by taking out the slurry from a reaction container, and cleaning and drying the slurry. The copolymer can be recovered in a shape of powder by the drying.

The copolymer obtained by the polymerization may be formed into pellets. A method of forming into pellets is not limited, and a conventionally known method can be used. Examples thereof include methods of melt extruding the copolymer by using a single-screw extruder, a twin-screw extruder or a tandem extruder and cutting the resultant into a predetermined length to form the copolymer into pellets. The extrusion temperature in the melt extrusion needs to be varied depending on the melt viscosity and the production method of the copolymer, and is preferably from the melting point of the copolymer +20°C to the melting point of the copolymer +140°C. A method of cutting the copolymer is not limited, and there can be adopted a conventionally known method such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water at 30 to 200°C, steam at 100 to 200°C, or hot air at 40 to 200°C.

Alternatively, the copolymer obtained by the polymerization may be subjected to fluorination treatment. The fluorination treatment can be carried out by bringing the copolymer having been subjected to no fluorination treatment into contact with a fluorine-containing compound. By the fluorination treatment, thermally unstable functional groups of the copolymer, such as -COOH, -COOCH$_3$, -CH$_2$OH, -COF, -CF=CF$_2$, and -CONH$_2$ and thermally relatively stable functional groups thereof, such as -CF$_2$H can be converted to thermally very stable -CF$_3$. Consequently, the total number (the number of functional groups) of -COOH, -COOCH$_3$, -CH$_2$OH, -COF, -CF=CF$_2$, -CONH$_2$, and -CF$_2$H of the copolymer can be easily regulated to the above-mentioned range.

The fluorine-containing compound is not limited, but includes fluorine radical sources generating fluorine radicals under the fluorination treatment condition. The fluorine radical sources include F$_2$ gas, CoF$_3$, AgF$_2$, UF$_6$, OF$_2$, N$_2$F$_2$, CF$_3$OF, and halogen fluorides (for example, IF$_3$ and ClF$_3$).

The fluorine radical source such as F$_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas include nitrogen gas, helium gas and argon gas, but from the viewpoint of the economic efficiency, nitrogen gas is preferred.

The condition of the fluorination treatment is not limited, and the copolymer in a molten state may be brought into contact with the fluorine-containing compound, but the fluorination treatment can be carried out usually at a temperature of not higher than the melting point of the copolymer, preferably at 20 to 240°C, and more preferably at 100 to 220°C. The fluorination treatment is carried out usually for 1 to 30 hours and preferably 5 to 25 hours. The fluorination treatment is preferred which brings the copolymer having been subjected to no fluorination treatment into contact with fluorine gas (F$_2$ gas).

A composition may be obtained by mixing the copolymer of the present disclosure and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents, and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube, and glass fiber. The electrically conductive agents include carbon black. The plasticizers include dioctyl phthalate and pentaerythritol. The processing aids include carnauba wax, sulfone compounds, low molecular weight polyethylene, and fluorine-based auxiliary agents. The dehydrofluorination agents include organic oniums and amidines.

As the above-mentioned other components, other polymers other than the copolymer may be used. The other polymers include fluororesins other than the copolymer, fluoroelastomer, and non-fluorinated polymers.

A method of producing the composition includes a method of dry mixing the copolymer and the other components, and a method of previously mixing the copolymer and the other components by a mixer and then melt kneading the mixture by a kneader, melt extruder or the like.

The copolymer of the present disclosure or the above-mentioned composition can be used as a processing aid, a forming material and the like, but use as a forming material is suitable. There can also be utilized aqueous dispersions, solutions and suspensions of the copolymer of the present disclosure, and the copolymer/solvent-based materials; and these can be used for application of coating materials, encapsulation, impregnation, and casting of films. However, since the copolymer of the present disclosure has the above-mentioned properties, it is preferable to use the copolymer as the forming material.

A formed article may be obtained by forming the copolymer of the present disclosure or the above composition.

A method of forming the copolymer or the composition is not limited, and includes injection molding, extrusion forming, compression molding, blow molding, transfer molding, rotomolding, and rotolining molding. The forming method, in particular, is preferably extrusion forming, compression molding, injection molding, and transfer molding; from the viewpoint of being able to produce formed articles in high productivity, more preferable are injection molding, extrusion forming, and transfer molding, and still more preferable is injection molding. That is, the formed article is preferably an extrusion formed article, a compression formed article, an injection molded article, or a transfer formed article; and from the viewpoint of being able to produce a formed article in high productivity, is more preferably an injection molded article, an extrusion formed article, or a transfer formed article, and is still more preferably an injection molded article. By forming the copolymer of the present disclosure by injection molding, an injection molded article having an attractive appearance can be obtained without corroding the metal mold to be used in molding.

The formed article containing the copolymer of the present disclosure may be, for example, a nut, a bolt, a joint, a film, a bottle, a gasket, an electric wire coating, a tube, a hose, a pipe, a valve, a sheet, a seal, a packing, a tank, a roller, a container, a cock, a connector, a filter housing, a filter cage, a flow meter, a pump, a wafer carrier, and a wafer box.

The copolymer of the present disclosure, the above composition and the above formed article can be used, for example, in the following applications.

Food packaging films, and members for liquid transfer for food production apparatuses, such as lining materials of fluid transfer lines, packings, sealing materials and sheets, used in food production processes;

chemical stoppers and packaging films for chemicals, and members for chemical solution transfer, such as lining materials of liquid transfer lines, packings, sealing materials and sheets, used in chemical production processes;

inner surface lining materials of chemical solution tanks and piping of chemical plants and semiconductor factories;

members for fuel transfer, such as O (square) rings, tubes, packings, valve stem materials, hoses and sealing materials, used in fuel systems and peripheral equipment of automobiles, and such as hoses and sealing materials, used in ATs of automobiles;

members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;

members for chemical transfer for semiconductor production apparatuses, such as O (square) rings, tubes, packings, valve stem materials, hoses, sealing materials, rolls, gaskets, diaphragms and joints;

members for coating and inks, such as coating rolls, hoses and tubes, for coating facilities, and containers for inks;

members for food and beverage transfer, such as tubes, hoses, belts, packings and joints for food and beverage, food packaging materials, and members for glass cooking appliances;

members for waste liquid transport, such as tubes and hoses for waste transport;

members for high-temperature liquid transport, such as tubes and hoses for high-temperature liquid transport;

members for steam piping, such as tubes and hoses for steam piping;

corrosion-proof tapes for piping, such as tapes to be wound on piping of decks and the like of ships;

various coating materials, such as electric wire coating materials, optical fiber coating materials, and transparent front side coating materials installed on the light incident side and back side lining materials of photoelectromotive elements of solar cells;

diaphragms and sliding members such as various types of packings of diaphragm pumps;

films for agriculture, and weathering covers for various kinds of roof materials, sidewalls and the like; interior materials used in the building field, and coating materials for glasses such as non-flammable fireproof safety glasses; and

lining materials for laminate steel sheets used in the household electric field.

The fuel transfer members used in fuel systems of automobiles further include fuel hoses, filler hoses, and evap hoses. The above fuel transfer members can also be used as fuel transfer members for gasoline additive-containing fuels, resistant to sour gasoline, resistant to alcohols, and resistant to methyl tertiary butyl ether and amines and the like.

The above chemical stoppers and packaging films for chemicals have excellent chemical resistance to acids and the like. The above chemical solution transfer members also include corrosion-proof tapes to be wound on chemical plant pipes.

The above formed article also includes vehicular radiator tanks, chemical solution tanks, bellows, spacers, rollers and gasoline tanks, waste solution transport containers, high-temperature liquid transport containers and fishery and fish farming tanks.

The above formed article further includes members used for vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

Due to that the formed article containing the copolymer of the present disclosure has excellent abrasion resistance, nitrogen low permeability, chemical solution low permeability, water vapor low permeability, 110°C high-temperature rigidity, high-temperature tensile creep properties, resistance to deterioration by repetitive load, extremely long-term ozone resistance, sealability at high temperatures, and non-stickiness, the formed article containing the copolymer of the present disclosure can suitably be used as a nut, a bolt, a joint, a packing, a valve, a cock, a connector, a filter housing, a filter cage, a flow meter, a pump, or the like.

The formed article containing the copolymer of the present disclosure can be readily produced by injection molding without corroding a metal mold, has excellent abrasion resistance, nitrogen low permeability, chemical solution low permeability, water vapor low permeability, 110°C high-temperature rigidity, high-temperature tensile creep properties, resistance to deterioration by repetitive load, extremely long-term ozone resistance, sealability at high temperatures, and non-stickiness, hardly makes fluorine ions to dissolve out in an electrolytic solution, and thus can suitably be used as a member to be compressed such as a gasket or a packing. The member to be compressed of the present disclosure may be a gasket or a packing. The gasket or packing of the present disclosure can be inexpensively produced by injection molding without corroding a metal mold, is hardly damaged even when installed in a place where opening and closing are repeated highly frequently, and has excellent sealability at high temperatures, nitrogen low permeability, chemical solution low permeability, and water vapor low permeability. Due to that the members to be compressed of the present disclosure have excellent abrasion resistance, chemical solution low permeability, extremely long-term ozone resistance, sealability at high temperatures, chemical solution low permeability, and water vapor low permeability, the member to be compressed of the present disclosure can suitably be used as a piping member for transferring a chemical solution that should not be mixed with moisture such as water vapor in outside air.

The members to be compressed of the present disclosure, even when being deformed at a high compression deformation rate, exhibit a high seal pressure. The members to be compressed of the present disclosure can be used in a state of being compressed at a compression deformation rate of 10% or higher, and can be used in a state of being compressed at a compression deformation rate of 20% or higher or 25% or higher. By using the members to be compressed of the present disclosure by being deformed at such a high compression deformation rate, a certain rebound resilience can be retained for a long term, and the sealing property and the insulating property can be retained for a long term.

The members to be compressed of the present disclosure, even when being deformed at a high temperature and at a high compression deformation rate, exhibits a high storage elastic modulus, a large amount of recovery, and a high seal pressure. The members to be compressed of the present disclosure can be used at 150°C or higher and in a state of being compression deformed at a compression deformation rate of 10% or higher, and can be used at 150°C or higher and in a state of being compression deformed at a compression deformation rate of 20% or higher or 25% or higher. By using the members to be compressed of the present disclosure by being deformed at such a high temperature and at such a high compression deformation rate, a certain rebound resilience can be retained also at high temperatures for a long term and the sealing property and the insulating property at high temperatures can be retained for a long term.

In the case where the member to be compressed is used in a state of being compressed, the compression deformation rate is a compression deformation rate of a portion having the highest compression deformation rate. For example, in the case where a flat member to be compressed is used in a state of being compressed in the thickness direction, the compression deformation rate is that in the thickness direction. Further, for example, in the case where a member to be compressed is used with only some portions of the member being compressed, the compression deformation rate is that of a portion having the highest compression deformation rate among compression deformation rates of the compressed portions.

The size and shape of the members to be compressed of the present disclosure may suitably be set according to applications, and are not limited. The shape of the members to be compressed of the present disclosure may be, for example, annular. The members to be compressed of the present disclosure may also have, in plan view, a circular shape, an elliptical shape, a corner-rounded square or the like, and may be a shape having a through-hole in the central portion thereof.

The member to be compressed of the present disclosure is preferably used as a piping member for circulating a chemical solution such as ozone water. The member to be compressed of the present disclosure has excellent extremely long-term ozone resistance, sealability at high temperatures, abrasion resistance, chemical solution low permeability, and water vapor low permeability, and is therefore particularly suitable as a member that is used in a state of being in contact with ozone water. That is, the member to be compressed of the present disclosure may have a surface that comes into contact with ozone water.

The member to be compressed of the present disclosure is preferably used as a member constituting a non-aqueous electrolyte battery. The member to be compressed of the present disclosure has excellent abrasion resistance, chemical solution low permeability, water vapor low permeability, sealability at high temperatures, 110°C high-temperature rigidity, high-temperature tensile creep properties, and resistance to deterioration by repetitive load, hardly makes fluorine ions to dissolve out in an electrolytic solution, and is thus particularly suitable as a member that is used in a state of being in contact with a non-aqueous electrolyte in a non-aqueous electrolyte battery. That is, the member to be compressed of the present disclosure may have a surface that comes into contact with a non-aqueous electrolyte in a non-aqueous electrolyte battery.

The members to be compressed of the present disclosure hardly make fluorine ions to dissolve out in a non-aqueous electrolyte. Therefore, by using the members to be compressed of the present disclosure, the rise in the fluorine ion concentration in the non-aqueous electrolyte can be suppressed. Consequently, by using the members to be compressed of the present disclosure, the generation of gas such as HF in the non-aqueous electrolyte can be suppressed, and the deterioration and the shortening of the service life of the battery performance of the non-aqueous electrolyte batteries can be suppressed.

From the viewpoint that the members to be compressed of the present disclosure can more suppress the generation of gas such as HF in a non-aqueous electrolyte, and can more suppress the deterioration and the shortening of the service life of the battery performance of the non-aqueous electrolyte batteries, the amount of fluorine ions dissolving out to be detected in an electrolytic solution immersion test is, in terms of mass, preferably 1.0 ppm or smaller, more preferably 0.8 ppm or smaller, and still more preferably 0.7 ppm or smaller. The electrolytic solution immersion test can be carried out by preparing a test piece having a weight corresponding to 10 sheets of a formed article (15 mm $\times$ 15 mm $\times$ 0.2 mm) using a member to be compressed, and putting a glass sample bottle in which the test piece and 2 g of dimethyl carbonate (DMC) have been charged in a constant-temperature vessel at 80°C and allowing the sample bottle to stand for 144 hours.

The member to be compressed of the present disclosure hardly makes water vapor to permeate. Therefore, by using the member to be compressed of the present disclosure, the permeation of water vapor from outside to secondary batteries can be suppressed. Consequently, by using the member to be compressed of the present disclosure, the deterioration and the shortening of the service life of the battery performance of a non-aqueous electrolyte battery can be suppressed.

The water vapor permeability of the members to be compressed of the present disclosure is, from the viewpoint that the deterioration and the shortening of the service life of the battery performance of non-aqueous electrolyte batteries can be more suppressed, preferably 14.0 g·cm/m$^2$ or lower, more preferably 13.5 g·cm/m$^2$ or lower, and still more preferably 13.0 g·cm/m$^2$ or lower. The water vapor permeability of the members to be compressed can be measured under the condition having a temperature of 95°C and for 30 days. Due to that the content of PPVE unit, the melt flow rate (MFR), and the number of functional groups of the copolymer containing TFE unit and PPVE unit are suitably regulated, the copolymer of the present disclosure has excellent water vapor low permeability because. Accordingly, when a formed article containing the copolymer of the present disclosure is used as, for example, a piping member (such as a packing or a gasket) for feeding ozone water, permeation of water vapor through the piping member can be suppressed, thus the amount of ozone permeating the piping member together with water vapor can be also reduced, and thus excellent ozone resistance of the piping member can be retained for a long term.

The non-aqueous electrolyte batteries are not limited as long as being batteries having a non-aqueous electrolyte, and examples thereof include lithium ion secondary batteries and lithium ion capacitors. Members constituting the non-aqueous electrolyte batteries include sealing members and insulating members.

The non-aqueous electrolyte is not limited, and one or two or more of well-known solvents can be used such as propylene carbonate, ethylene carbonate, butylene carbonate, γ-butyllactone, 1,2-dimethoxyethane, 1,2-diethoxyethane, dimethyl carbonate, diethyl carbonate, and ethyl methyl carbonate. The non-aqueous electrolyte batteries may further have an electrolyte. The electrolyte is not limited, and may be $LiClO_4$, $LiAsF_6$, $LiPF_6$, $LiBF_4$, $LiCl$, $LiBr$, $CH_3SO_3Li$, $CF_3SO_3Li$, cesium carbonate, or the like.

The members to be compressed of the present disclosure can suitably be utilized, for example, as a sealing members such as sealing gaskets and sealing packings, and insulating members such as insulating gaskets or insulating packings. The sealing members are members to be used for preventing leakage of a liquid or a gas, or penetration of a liquid or a gas from outside. The insulating members are members to be used for insulating electricity. The members to be compressed of the present disclosure may also be members to be used for the purpose of both sealing and insulation.

The members to be compressed of the present disclosure, due to being excellent in the heat resistance and excellent in the sealability at high temperatures, can suitably be used under an environment of becoming high temperatures. It is suitable for the member to be compressed of the present disclosure to be used, for example, in an environment where the maximum temperature becomes 40°C or higher. It is suitable for the members to be compressed of the present disclosure to be used, for example, in an environment where the maximum temperature becomes 150°C or higher. Examples of the case where the temperature of the members to be compressed of the present disclosure may become such high temperatures include the case where after a member to be compressed is installed in a state of being compressed to the battery, other battery members are installed to the battery by welding, and a case where a non-aqueous electrolyte battery generates heat.

Due to that the members to be compressed of the present disclosure have excellent water vapor low permeability, has excellent sealability at high temperatures, and hardly makes fluorine ions to dissolve out in an electrolytic solution, the members to be compressed of the present disclosure can suitably be used as sealing members for a non-aqueous electrolyte batteries or insulating members for a non-aqueous electrolyte batteries. For example, in the charge time of batteries such as a non-aqueous electrolyte secondary batteries, the temperature of the batteries temporarily may becomes 40°C or higher, specially temporarily becomes 150°C or higher in some cases. Even when the members to be compressed of the present disclosure are used by being deformed at high temperatures and at a high compression deformation rate, and, moreover are brought into contact with non-aqueous electrolytes at high temperatures, in batteries such as non-aqueous electrolyte batteries, a high rebound resilience is not impaired. Therefore, the members to be compressed of the present disclosure, in the case being used as sealing members, have excellent sealing property and also at high temperatures, retain the sealing property for a long term. Further, the members to be compressed of the present disclosure, due to containing the above copolymer, have the excellent insulating property. Therefore, in the case using the member to be compressed of the present disclosure as insulating members, the members firmly adhere to two or more electrically conductive members and prevent short circuits for a long term.

The copolymer of the present disclosure hardly corrodes a core wire to be coated. Moreover, from the viewpoint that an extremely thick coating layer having a uniform thickness can be formed on a core wire having an extremely large diameter by forming the copolymer of the present disclosure by extrusion forming, the copolymer of the present disclosure can suitably be used as a material for forming an electric wire coating. Accordingly, the coated electric wire provided with a coating layer containing the copolymer of the present disclosure has excellent electrical properties because the core wire is hardly corroded, and the outer diameter is barely varied.

In an attempt to form an extremely thick coating layer having a uniform thickness on a core wire having an extremely large diameter, it takes time for a molten coating layer to solidify, also the weight of the coating layer is large, and therefore the use of a conventional copolymer is problematic in that the coating layer deforms under its own weight before it solidifies, and that it is difficult to form a coating layer having a uniform thickness. By using the copolymer of the present disclosure, an extremely thick coating layer having a uniform thickness can be formed.

The coated electric wire has a core wire, and the coating layer installed on the periphery of the core wire and that containing the copolymer of the present disclosure. For example, an extrusion-formed article made by melt extruding the copolymer of the present disclosure on a core wire can be made into the coating layer. The coated electric wires are suitable to a high-frequency transmission cables, flat cables, heat-resistant cables and the like, and particularly to a high-frequency transmission cables.

As a material for core wire, for example, a metal conductor material such as copper or aluminum can be used. The core wire preferably one having a diameter of 0.02 to 3 mm. The diameter of the core wire is more preferably 0.04 mm or more, still more preferably 0.05 mm or more, and especially preferably 0.1 mm or more. The diameter of the core wire is more preferably 2 mm or less.

With regard to specific examples of the core wire, there may be used, for example, AWG (American Wire Gauge)-46 (solid copper wire of 40 μm in diameter), AWG-26 (solid copper wire of 404 μm in diameter), AWG-24 (solid copper wire of 510 μm in diameter), and AWG-22 (solid copper wire of 635 μm in diameter).

The coating layer is preferably one having a thickness of 0.1 to 3.0 mm. It is also preferable that the thickness of the coating layer is 2.0 mm or less.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the copolymer of the present disclosure can suitably be utilized as the insulating coating layer containing the copolymer. The thickness of each layer in the above structure is not limited, but is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may one containing cells, and is preferably one in which cells are homogeneously distributed.

The average cell size of the cells is not limited, but is, for example, preferably 60 $\mu$m or smaller, more preferably 45 $\mu$m or smaller, still more preferably 35 $\mu$m or smaller, further still more preferably 30 $\mu$m or smaller, especially preferably 25 $\mu$m or smaller, and further especially preferably 23 $\mu$m or smaller. Then, the average cell size is preferably 0.1 $\mu$m or larger and more preferably 1 $\mu$m or larger. The average cell size can be determined by taking an electron microscopic image of an electric wire cross section, calculating the diameter of each cell by image processing, and averaging the diameters.

The foaming ratio of the coating layer may be 20% or higher, and is more preferably 30% or higher, still more preferably 33% or higher, and further still more preferably 35% or higher. The upper limit is not limited, and is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) $\times$ 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the copolymer, extruding the copolymer in a melt state onto the core wire to thereby form the coating layer.

In formation of a coating layer, by heating the copolymer and introducing a gas in the copolymer in a melt state, the coating layer containing cells can be formed. As the gas, there can be used, for example, a gas such as chlorodifluoromethane, nitrogen or carbon dioxide, or a mixture thereof. The gas may be introduced as a pressurized gas into the heated copolymer, or may be generated by mingling a chemical foaming agent in the copolymer. The gas dissolves in the copolymer in a melt state.

Also, the copolymer of the present disclosure can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed wiring boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the copolymer of the present disclosure can suitably be used as an insulator in that the dielectric loss tangent is low.

As the (1) formed boards, printed wiring boards are preferable in that good electric property is provided. The printed wiring boards are not limited, but examples thereof include printed wiring boards of electronic circuits for cell phones, various computers, communication devices, and the like. As the (2) formed articles, antenna covers are preferable in that the low dielectric loss is low.

The copolymer of the present disclosure can be formed by extrusion forming to obtain a visually attractive sheet. Also, a formed articles containing the copolymer of the present disclosure has excellent nitrogen low permeability, chemical solution low permeability, water vapor low permeability, and non-stickiness. Accordingly, the formed article containing the copolymer of the present disclosure can be suitably utilized as a film or a sheet.

In particular, the film of the present disclosure has excellent non-stickiness. Accordingly, even when the film of the present disclosure and a resin such as epoxy resin, a toner, or the like are hot-pressed, they do not adhere to each other, and the resin, toner, or the like can be separated from the film.

The film of the present disclosure is useful as a release film. The release film can be produced by forming the copolymer of the present disclosure by melt extrusion forming, calendering, press molding, casting, or the like. From the viewpoint that uniform thin films can be obtained, the release films can be produced by melt extrusion forming.

The film of the present disclosure can be applied to the surface of a roll that is used in OA devices. The copolymer of the present disclosure is formed into a required shape by extrusion forming, compression molding, press molding, or the like, such as a sheet, a film, or a tube, and can be used as a surface material of a roll, a belt, or the like of OA devices. In particular, a thin-wall tube and film can be produced by melt extrusion forming.

The formed article containing the copolymer of the present disclosure has excellent abrasion resistance, nitrogen low permeability, chemical solution low permeability, water vapor low permeability, 110°C high-temperature rigidity, high-temperature tensile creep properties, resistance to deterioration by repetitive load, extremely long-term ozone resistance, sealability at high temperatures, and non-stickiness, also hardly makes fluorine ions to dissolve out in an electrolytic solution, and thus can suitably be used as a bottle or a tube.

So far, embodiments have been described above, but it is to be understood that various changes and modifications of patterns and details may be made without departing from the subject matter and the scope of the claims.

EXAMPLES

The embodiments of the present disclosure will be described by Examples as follows, but the present disclosure is not limited only to these Examples.

Each numerical value in Examples was measured by the following methods.

(Content of a monomer unit)

The content of each monomer unit was measured by an NMR analyzer (for example, manufactured by Bruker BioSpin GmbH, AVANCE 300, high-temperature probe).

(Melt flow rate (MFR))

The polymer was made to flow out from a nozzle of 2.1 mm in inner diameter and 8 mm in length at 372°C under a load of 5 kg by using a Melt Indexer G-01 (manufactured by Toyo Seiki Seisaku-sho, Ltd.) according to ASTM D1238, and the mass (g/10 min) of the polymer flowing out per 10 min was determined.

(Number of functional groups)

Pellets of the copolymer was formed by cold press into a film of 0.25 to 0.30 mm in thickness. The film was 40 times scanned and analyzed by a Fourier transform infrared spectrometer [FT-IR (Spectrum One, manufactured by PerkinElmer, Inc.)] to obtain an infrared absorption spectrum, and a difference spectrum against a base spectrum that was completely fluorinated and had no functional groups was obtained. From an absorption peak of a specific functional group observed on this difference spectrum, the number N of functional groups per $1 \times 10^6$ carbon atoms in a sample was calculated according to the following formula (A):

$$N = I \times K/t \cdots (A)$$

I:   absorbance
K:   correction factor
t:   thickness of film (mm)

Regarding the functional groups in the present disclosure, for reference, the absorption frequency, the molar absorption coefficient, and the correction factor are shown in Table 2. The molar absorption coefficient are those determined from FT-IR measurement data of low molecular model compounds.

[Table 2]

Table 2

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |

(continued)

| Functional Group | Absorption Frequency (cm$^{-1}$) | Molar Extinction Coefficient (l/cm/mol) | Correction Factor | Model Compound |
|---|---|---|---|---|
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Melting point)

The polymer was heated, as a first temperature raising step, at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corporation), and the melting point was determined from a melting curve peak observed in the second temperature raising step.

Example 1

26.6 L of pure water was charged in a 174 L-volume autoclave; nitrogen replacement was sufficiently carried out, thereafter, 30.4 kg of perfluorocyclobutane, 1.21 kg of perfluoro(propyl vinyl ether) (PPVE), and 0.26 kg of methanol were charged; and the temperature in the system was held at 35°C and the stirring speed was held at 200 rpm. Then, tetrafluoroethylene (TFE) was introduced under pressure up to 0.58 MPa, and thereafter 0.010 kg of a 50% methanol solution of di-n-propyl peroxydicarbonate was charged to initiate polymerization. Since the pressure in the system decreased along with the progress of the polymerization, TFE was continuously supplied to make the pressure constant, and 0.043 kg of PPVE was added for every 1 kg of TFE supplied and the polymerization was continued for 6 hours. TFE was released to return the pressure in the autoclave to the atmospheric pressure, and thereafter, an obtained reaction product was washed with water and dried to thereby obtain 15 kg of a powder.

The obtained powder was melt extruded at 360°C with a screw extruder (trade name: PCM46, manufactured by Ikegai Corp) to thereby obtain pellets of a TFE/PPVE copolymer. The PPVE content of the obtained pellets was measured by the method described above. The results are shown in Table 3.

The obtained pellets were put in a vacuum vibration-type reactor VVD-30 (manufactured by Okawara MFG. Co., Ltd.), and heated to 210°C. After vacuumizing, F$_2$ gas diluted to 20% by volume with N$_2$ gas was introduced to the atmospheric pressure. 0.5 hour after the F$_2$ gas introduction, vacuumizing was once carried out and F$_2$ gas was again introduced. Further, 0.5 hour thereafter, vacuumizing was again carried out and F$_2$ gas was again introduced. Thereafter, while the above operation of the F$_2$ gas introduction and vacuumizing was carried out once every 1 hour, and the reaction was carried out at a temperature of 210°C for 10 hours. After the reaction was finished, the reactor interior was replaced sufficiently by N$_2$ gas to finish the fluorination reaction. By using the fluorinated pellet, various physical properties were measured by the methods described above. The results are shown in Table 3.

Example 2

Fluorinated pellets were obtained as in Example 1, except for changing the amount of PPVE to 1.32 kg, changing the amount of methanol to 0.31 kg, adding 0.046 kg of PPVE for every 1 kg of TFE supplied, changing the polymerization time to 6.5 hours, changing the raised temperature of the vacuum vibration-type reactor to 170°C, and changing the reaction condition at a temperature of 170°C and 5 hours. The results are shown in Table 3.

Example 3

Fluorinated pellets were obtained as in Example 1, except for changing the amount of PPVE to 1.40 kg, changing the amount of methanol to 0.31 kg, adding 0.048 kg of PPVE for every 1 kg of TFE supplied, and changing the polymerization time to 6.5 hours. The results are shown in Table 3.

Example 4

Fluorinated pellets were obtained as in Example 1, except for changing the amount of PPVE to 1.48 kg, changing the amount of methanol to 0.35 kg, adding 0.050 kg of PPVE for every 1 kg of TFE supplied, and changing the polymerization time to 6.5 hours. The results are shown in Table 3.

Comparative Example 1

Fluorinated pellets were obtained as in Example 1, except for changing the amount of PPVE to 0.97 kg, changing the amount of methanol to 0.37 kg, and adding 0.036 kg of PPVE for every 1 kg of TFE supplied. The results are shown in Table 3.

Comparative Example 2

Fluorinated pellets were obtained as in Example 1, except for changing the amount of PPVE to 1.05 kg, changing the amount of methanol to 0.29 kg, adding 0.038 kg of PPVE for every 1 kg of TFE supplied, and changing the polymerization time to 5.5 hours. The results are shown in Table 3.

Comparative Example 3

Fluorinated pellets were obtained as in Example 1, except for changing the amount of PPVE to 1.32 kg, changing the amount of methanol to 0.10 kg, and adding 0.046 kg of PPVE for every 1 kg of TFE supplied. The results are shown in Table 3.

Comparative Example 4

51.8 L of pure water was charged in 174 L-volume autoclave, nitrogen replacement was sufficiently carried out; thereafter, 40.9 kg of perfluorocyclobutane, 2.24 kg of perfluoro(propyl vinyl ether) (PPVE) and 1.85 kg of methanol were charged; the temperature in the system was held at 35°C and the stirring speed was held at 200 rpm. Then, tetrafluoroethylene (TFE) was introduced under pressure up to 0.64 MPa, and thereafter 0.051 kg of a 50% methanol solution of di-n-propyl peroxydicarbonate was charged to initiate polymerization. Since the pressure in the system decreased along with the progress of the polymerization, TFE was continuously supplied to make the pressure constant, and 0.049 kg of PPVE was additionally for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to obtain 41.0 kg of a powder.
By using the obtained powder, the melt extrusion was carried out as in Example 1 to thereby obtain non-fluorinated pellets. The results are shown in Table 3.

Comparative Example 5

51.8 L of pure water was charged in a 174 L-volume autoclave; nitrogen replacement was sufficiently carried out; thereafter, 40.9 kg of perfluorocyclobutane, 1.85 kg of perfluoro(propyl vinyl ether) (PPVE), and 3.36 kg of methanol were charged, and the temperature in the system was held at 35°C and the stirring speed was held at 200 rpm. Then, tetrafluoroethylene (TFE) was introduced under pressure up to 0.64 MPa, and thereafter 0.051 kg of a 50% methanol solution of di-n-propyl peroxydicarbonate was charged to initiate polymerization. Since the pressure in the system decreased along with the progress of the polymerization, TFE was continuously supplied to make pressure constant, and 0.043 kg of PPVE was added for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to thereby obtain 41.0 kg of a powder.
By using the obtained powder, was the fluorination reaction was carried out as in Example 1 to thereby obtain fluorinated pellets. The results are shown in Table 3.

Comparative Example 6

Fluorinated pellets were obtained as in Comparative Example 5, except for changing the amount of PPVE to 2.53 kg, changing the amount of methanol to 3.42 kg, changing the amount of the 50% methanol solution of di-n-propyl peroxydicarbonate to 0.026 kg, adding 0.055 kg of PPVE for every 1 kg of TFE supplied, to thereby obtain 41.0 kg of a dry powder. The results are shown in Table 3.

[Table 3]

Table 3

| | PPVE content (% by mass) | MFR (g/10 min) | Number of functional groups (groups/$C10^6$) | Melting point (°C) |
|---|---|---|---|---|
| Example 1 | 4.1 | 5.0 | <6 | 304 |
| Example 2 | 4.4 | 6.5 | 28 | 303 |
| Example 3 | 4.6 | 7.5 | <6 | 303 |
| Example 4 | 4.8 | 9.0 | <6 | 302 |
| Comparative Example 1 | 3.5 | 8.5 | <6 | 307 |
| Comparative Example 2 | 3.7 | 5.4 | <6 | 306 |
| Comparative Example 3 | 4.4 | 2.2 | <6 | 302 |
| Comparative Example 4 | 4.7 | 8.0 | 184 | 303 |
| Comparative Example 5 | 4.1 | 10.0 | <6 | 304 |
| Comparative Example 6 | 5.2 | 5.0 | <6 | 302 |

The description of "<6" in Table 3 means that the number of functional groups is less than 6.
Then, by using the obtained pellets, the following properties were evaluated. The results are shown in Table 4.

(Storage elastic modulus (E'))

The storage elastic modulus was determined by carrying out a dynamic viscoelasticity measurement using a DVA-220 (manufactured by IT Keisoku Seigyo K.K.). By using, as a sample test piece, a heat press molded sheet of 25 mm in length, 5 mm in width and 0.2 mm in thickness, the measurement was carried out under the condition of a temperature-increasing rate of 2°C/min, and a frequency of 10 Hz, and in a range of 30°C to 250°C, and the storage elastic modulus (MPa) at 150°C was identified.

(Amount of recovery)

The measurement of the amount of recovery was carried out according to a method described in ASTM D395 or JIS K6262:2013.
Approximately 2 g of the pellets were charged in a metal mold (inner diameter: 13 mm, height: 38 mm), and in that state, melted by hot plate press at 370°C for 30 min, thereafter, water-cooled under a pressure of 0.2 MPa (resin pressure) to thereby prepare a formed article of approximately 8 mm in height. Thereafter, the obtained formed article was cut to prepare a test piece of 13 mm in outer diameter and 6 mm in height. The prepared test piece was compressed to a compression deformation rate of 50% (that is, the test piece of 6 mm in height was compressed to a height of 3 mm) at a normal temperature by using a compression device. The compressed test piece being fixed on the compression device was allowed to stand still in an electric furnace at 150°C for 18 hours. The compression device was taken out from the electric furnace, and cooled to room temperature; thereafter the test piece was dismounted. The collected test piece was allowed to stand at room temperature for 30 min, and the height of the collected test piece was measured and the amount of recovery was determined by the following formula.

$$\text{Amount of recovery (mm)} = t_2 - t_1$$

$t_1$: a height of spacer (mm)
$t_2$: a height of the test piece dismounted from compression device (mm)

In the above test, $t_1$ was 3 mm.

(Seal pressure at 150°C)

The seal pressure at 150°C was determined from the result of the compression set test at 150°C and the result of the storage elastic modulus measurement at 150°C by the following formula.

$$\text{Seal pressure at 150°C (MPa)} = (t_2 - t_1)/t_1 \times E'$$

$t_1$: the height of a spacer (mm)
$t_2$: the height of the test piece dismounted from the compression device (mm)
$E'$: the storage elastic modulus at 150°C (MPa)

(Water vapor permeability)

By using the pellets and a heat press molding machine, a sheet-shape test piece of approximately 0.2 mm in thickness was prepared. 18 g of water was put in a test cup (permeation area: 12.56 $cm^2$), and the test cup was covered with the sheet-shape test piece; and a PTFE gasket was pinched and fastened to hermetically close the test cup. The sheet-shape test piece was brought into contact with water, and held at a temperature of 95°C for 30 days, and thereafter, the test cup was taken out and allowed to stand at room temperature for 2 hours; thereafter, the amount of the mass lost was measured. The water vapor permeability ($g \cdot cm/m^2$) was determined by the following formula.

$$\text{Water vapor permeability } (g \cdot cm/m^2) = \text{the amount of the}$$
$$\text{mass lost (g)} \times \text{the thickness of sheet-shape test piece (cm) /}$$
$$\text{the permeation area } (m^2)$$

(Injection moldability)

The copolymer was injection-molded by using an injection molding machine (SE50EV-A, manufactured by Sumitomo Heavy Industries, Ltd.) set at a cylinder temperature of 395°C, a metal mold temperature of 220°C and an injection speed of 3 mm/s. As a metal mold, a metal mold (100 mm $\times$ 100 mm $\times$ 3 mmt, film gate, flow length from the gate: 100 mm) obtained by Cr-plating HPM38 was used. The obtained injection molded article was observed and evaluated according to the following criteria. The presence/absence of white turbidity was visually checked. The presence/absence of surface roughness was checked by touching the surface of the injection molded article.

3: The whole of the injection molded article was transparent and the whole surface was smooth.
2: White turbidity was observed within the region of 1 cm from the portion where the gate of the metal mold had been positioned, and the whole surface was smooth.
1: White turbidity was observed within the region of 1 cm from the portion where the gate of the metal mold had been positioned, and roughness was observed on the surface within the region of 1 cm of the portion where the gate of the metal mold had been positioned.
0: The copolymer was not filled in the whole of the metal mold, and the formed article having a desired shape was not obtained.

(Electrolytic solution immersion test)

Approximately 5 g of the pellets was charged in a metal mold (inner diameter: 120 mm, height: 38 mm), and melted by hot plate press at 370°C for 20 min, thereafter, water-cooled with a pressure of 1 MPa (resin pressure) to thereby prepare a formed article of approximately 0.2 mm in thickness. Thereafter, by using the obtained formed article, test pieces of 15-mm square were prepared.

10 sheets of the obtained test pieces and 2 g of dimethyl carbonate (DMC) were put in a 20-mL glass sample bottle, and the cap of the sample bottle was closed. The sample bottle was put in a thermostatic chamber at 80°C, and allowed to stand for 144 hours to thereby immerse the test pieces in DMC. Thereafter, the sample bottle was taken out from the thermostatic chamber, and cooled to room temperature; then the test pieces were taken out from the sample bottle. DMC remaining after the test pieces were taken out was allowed to be air-dried in the sample bottle put in a room controlled to be a temperature of 25°C for 24 hours; and 2 g of ultrapure water was added. The obtained aqueous solution was transferred to a measuring cell of an ion chromatosystem; and the amount of fluorine ions in the aqueous solution was measured by an ion chromatograph system (manufactured by Thermo Fisher Scientific Inc., Dionex ICS-2100).

(Metal mold corrosion test)

20 g of the pellets was put in a glass container (50-ml screw vial); and a metal post (5-mm square shape, length of 30 mm) formed of HPM38 (Cr-plated) or HPM38 (Ni-plated) was hung in the glass container so as not to be in contact with the pellets. Then, the glass container was covered with a lid made of aluminum foil. The glass container was put in an oven as is and heated at 380°C for 3 hours. Thereafter, the heated glass container was taken out from the oven, and cooled to room temperature; and the degree of corrosion of the surface of the metal post was visually observed. The degree of corrosion was judged according to the following criteria.

Good: no corrosion observed
Fair: corrosion slightly observed
Poor: corrosion observed

(Electric wire coating test)

Extrusion coating in the following coating thickness was carried out on a copper conductor of 1.00 mm in conductor diameter by a 30-mmφ electric wire coating forming machine (manufactured by Tanabe Plastics Machinery Co., Ltd.), to thereby obtain a coated electric wire. The extrusion conditions for the electric wire coating were as follows.

a) Core conductor: 1.00 mm in conductor diameter
b) Coating thickness: 0.50 mm
c) Coated electric wire diameter: 2.00 mm
d) Electric wire take-over speed: 7 m/min
e) Extrusion condition:

- Cylinder screw diameter = 20 mm, a single-screw extruder of LID = 22

    · Die (inner diameter)/tip (outer diameter) = 30.0 mm/10.0 mm

    Set temperature of extruder: barrel section C-1 (330°C), barrel section C-2 (360°C), barrel section C-3 (375°C), head section H (390°C), die section D-1 (405°C), die section D-2 (395°C). Set temperature for preheating core wire: 80°C

(Variation of outer diameter)

The outer diameter of the obtained coated electric wire was continuously measured for 1 hour using a diameter measuring head (ODAC 18XY manufactured by Zumbach). Among the measured outer diameter values, the outer diameter value that most deviated from the predetermined outer diameter value (2.00 mm) was rounded off to the third decimal place to determine a variation value of the outer diameter. The ratio (the outer diameter variation ratio) of the absolute value of the difference between the predetermined outer diameter (2.00 mm) and the outer diameter variation value to the predetermined outer diameter was calculated, and evaluated according to the following criteria.

$$(\text{outer diameter variation ratio (\%))} = |\ (\text{outer diameter variation value}) - (\text{predetermined outer diameter})\ |\ /\ (\text{predetermined outer diameter}) \times 100$$

±1%: outer diameter variation ratio being 1% or less
±2%: outer diameter variation ratio being greater than 1% and 2% or less
×: outer diameter variation ratio being greater than 2%

(Core wire corrosion test)

The obtained coated electric wire was cut out so as to have a length of 20 cm, and was allowed to stand still in a thermohygrostatic chamber (Junior SD-01, manufactured by Formosa Advanced Technologies Co., Ltd.) at 60°C at a humidity of 95% for 2 weeks, then the coating layer was removed to expose the conductor, and the surface of the conductor was visually observed and evaluated according to the following criteria.

Good: no corrosion observed
Poor: corrosion observed

(Toner release test)

A $\varphi$14 mm extruder (manufactured by Imoto machinery Co., LTD.) and a T die were used to create a film. The extrusion conditions were as follows.

a) Take-up speed: 1 m/min
b) Roll temperature: 120°C
c) Film width: 70 mm
d) Thickness: 0.10 mm
e) Extrusion condition:

- Cylinder screw diameter = 14 mm, a single-screw extruder of L/D = 20

Set temperature of extruder: barrel section C-1 (330°C), barrel section C-2 (350°C), barrel section C-3 (370°C), T die section (380°C)
A test piece having 50 mm × 50 mm was cut out from the obtained film having a thickness of 0.10 mm, the obtained test piece was laid on an SUS vat, 3 g of a black toner powder was spread in a circular shape having a diameter of about 30 mm onto the test piece, the lid of the vat was closed, and with the inside being an isolated space, the vat was put in a constant-temperature vessel heated to 160°C. After 10 minutes, the vat was taken out, and after standing to cool to room temperature, the test piece was taken out from the vat. Melt-solidified matter of the black toner was peeled off from the test piece, and the peeled surface of the test piece was visually observed and evaluated according to the following criteria.

Good: no black deposits observed on peeled surface of test piece
Poor: black deposits observed on peeled surface of test piece

(Abrasion test)

By using the pellets and a heat press molding machine, a sheet-shape test piece of approximately 0.2 mm in thickness was prepared, and a test piece having 10 cm × 10 cm was cut out therefrom. The prepared test piece was fixed to a test bench of a Taber abrasion tester (No. 101-H Taber type abrasion tester with an option, manufactured by Yasuda Seiki Seisakusho, Ltd.), and the abrasion test was carried out using the Taber abrasion tester under conditions involving a load of 500 g, an abrasion wheel CS-10 (rotationally polished in 20 rotations with an abrasive paper #240), and a rotation rate of 60 rpm. The weight of the test piece after 1,000 rotations was measured, and the same test piece was further subjected to the test of 10,000 rotations, and then the weight of the test piece was measured. The abrasion loss was determined by the following formula.

$$\text{Abrasion loss (mg)} = M1 - M2$$

M1: weight of test piece after 1,000 rotations (mg)
M2: weight of test piece after 10,000 rotations (mg)

(Nitrogen permeability coefficient)

By using the pellets and a heat press molding machine, a sheet-shape test piece of approximately 0.1 mm in thickness was prepared. Using the obtained test piece, nitrogen permeability was measured with a differential pressure type gas permeation meter (L100-5000 gas permeability meter, manufactured by Systech Illinois) according to the method described in JIS K7126-1:2006. The nitrogen permeability value at a permeation area of 50.24 $cm^2$ at a test temperature of 70°C at a test humidity of 0% RH was obtained. The obtained nitrogen permeability and the test piece thickness were used to calculate the nitrogen permeability coefficient from the following equation.

$$\text{Nitrogen permeability coefficient } (cm^3 \cdot mm/(m^2 \cdot 24 \ h \cdot atm))$$

$$= GTR \times d$$

GTR: nitrogen permeability ($cm^3/ (m^2 \cdot 24 \ h \cdot atm)$ )
d: test piece thickness (mm)

(Electrolytic solution permeability)

By using the pellets and a heat press molding machine, a sheet-shape test piece of approximately 0.2 mm in thickness was prepared. 10 g of dimethyl carbonate (DMC) was put in a test cup (permeation area: 12.56 $cm^2$), the test cup was covered with the sheet-shape test piece; and a PTFE gasket was pinched and fastened to hermetically close the test cup. The sheet-shape test piece was brought into contact with DMC, and held at a temperature of 60°C for 30 days, and thereafter, the test cup was taken out and allowed to stand at room temperature for 1 hour; thereafter the amount of the mass lost was measured. The DMC permeability ($g \cdot cm/m^2$) was determined by the following formula.

$$\text{Electrolytic solution permeability } (g \cdot cm/m^2) = \text{the}$$

$$\text{amount of the mass lost (g)} \times \text{the thickness of the sheet-shape}$$

$$\text{test piece (cm) / the permeation area } (m^2)$$

(Ethyl acetate permeability)

By using the pellets and a heat press molding machine, a sheet-shape test piece of approximately 0.1 mm in thickness was prepared. 10 g of ethyl acetate was put in a test cup (permeation area: 12.56 $cm^2$), and the test cup was covered with the sheet-shape test piece; and a PTFE gasket was pinched and fastened to hermetically close the test cup. The sheet-shape test piece was brought into contact with ethyl acetate, and held at a temperature of 60°C for 45 days, thereafter the test cup was taken out and allowed to stand at room temperature for 1 hours, and then the amount of the mass lost was measured. Ethyl acetate permeability ($g \cdot cm/m^2$) was determined by the following formula.

$$\text{Ethyl acetate permeability } (g \cdot cm/m^2) = \text{the amount of}$$

$$\text{the mass lost (g)} \times \text{the thickness of the sheet-shape test piece}$$

$$\text{(cm) / the permeation area } (m^2)$$

(Rate of deflection at 110°C under load)

By using the pellets and a heat press molding machine, a sheet-shape test piece of approximately 4.2 mm in thickness was prepared, and a test piece having 80 × 10 mm was cut out therefrom and heated in an electric furnace at 100°C for 20 hours. Except that the obtained test piece was used, a test was carried out according to the method described in JIS K-K 7191-1 with a heat distortion tester (manufactured by Yasuda Seiki Seisakusho, Ltd.) under conditions involving a test temperature of 30 to 150°C, a temperature-increasing rate of 120°C/hour, a bending stress of 1.8 MPa, and a flatwise method. The rate of deflection under load was determined by the following formula. A sheet, the rate of deflection at 110°C under load of which is small, has excellent rigidity at a high temperature of 110°C.

$$\texttt{Rate of deflection under load (\%) = a2 / a1 × 100}$$

a1: thickness of specimen before test (mm)
a2: amount of deflection at 110°C (mm)

(Tensile creep test)

Tensile creep strain was measured using TMA-7100 manufactured by Hitachi High-Tech Science Corporation. By using the pellets and a heat press molding machine, a sheet-shape test piece of approximately 0.1 mm in thickness was prepared, and a sample having a width of 2 mm and a length of 22 mm was prepared from the sheet. The sample was attached to the measurement jigs, with the distance between the jigs being 10 mm. A load was applied to the sample such that the cross-sectional load was 2.41 N/mm$^2$, the sample was left to stand at 240°C, the displacement (mm) of the length of the sample from 90 minutes after the beginning of the test to 300 minutes after the beginning of the test was measured, and the ratio of the displacement (mm) of the length to the initial sample length (10 mm) (tensile creep strain (%)) was calculated. A sheet, the tensile creep strain (%) of which measured under conditions involving a temperature of 240°C and for 300 minutes is small, is hardly elongated even when a tensile load is applied in an extremely high-temperature environment, and has excellent high temperature tensile creep properties.

(60,000-Time tensile strength retention rate)

The 60,000-time tensile strength retention rate was measured using a fatigue tester MMT-250NV-10 manufactured by Shimadzu Corporation. By using the pellets and a heat press molding machine, a sheet-shape test piece of approximately 2.4 mm in thickness was prepared, and an ASTM D1708 micro-dumbbell was used to prepare a dumbbell-shaped sample (thickness 2.4 mm, width 5.0 mm, length of measured portion 22 mm). The sample was attached to a measuring jig, and with the sample being attached, the measuring jig was put in a constant-temperature vessel at 150°C. The sample was cyclically pulled in the uniaxial direction at a stroke of 0.2 mm and a frequency of 100 Hz, and the tensile strength for each pull (the tensile strength when the stroke was +0.2 mm) was measured. The 60,000-time tensile strength retention rate was calculated from the measured values according to the following formula.

$$\texttt{60,000-Time tensile strength retention rate (\%) =}$$
$$\texttt{tensile strength (60,000 times) (mN) / tensile strength (5,000}$$
$$\texttt{times) (mN) × 100}$$

The 60,000-time tensile strength retention rate is the ratio of the tensile strength when repetitive load was applied 60,000 times to the tensile strength when repetitive load was applied 5,000 times. A sheet having a high 60,000-time tensile strength retention rate maintains the initial tensile strength even after repetitive load is applied 60,000 times, and has excellent resistance to deterioration by repetitive load.

(Ozone exposure test)

The copolymer was compression-molded at 350°C under a pressure of 0.5 MPa to prepare a sheet having a thickness of 1 mm, and a sheet having 10×20 mm was cut out therefrom, which was regarded as a sample for an ozone exposure test. Ozone gas (ozone/oxygen = 10/90% by volume) produced by an ozone generator (trade name: SGX-A11MN (modified), manufactured by Sumitomo Precision Products Co., Ltd.) was connected to a PFA container containing ion-exchanged water, bubbled in ion-exchanged water to add water vapor to ozone gas, and then ion-exchanged water was passed through the sample-containing PFA cell at 0.7 liters/min at room temperature to expose the sample to wet ozone gas. The sample was taken out 150 days after the beginning of exposure, the surface was lightly rinsed with ion-exchanged water, a portion at a depth of 5 to 200 µm from the sample surface was observed with a transmission optical microscope of 100 magnification, an image was taken with a standard scale, the number of cracks having a length of 10 µm or more per mm² of the sample surface was measured, and evaluations were made according to the following criteria.

Good: 10 cracks or less
Poor: more than 10 cracks

(Tube formability)

By using the pellets obtained in the Examples, a tube of 10.0 mm in outer diameter and 1.0 mm in wall thickness was extruded by a φ30-mm extruder (manufactured by Tanabe Plastics Machinery Co., Ltd.).
The extrusion conditions were as follows.

a) Die inner diameter: 20 mm
b) Mandrel outer diameter: 13 mm
c) Sizing die inner diameter: 10.5 mm
d) Take-over speed: 0.4 m/min
e) Outer diameter: 10.0 mm
f) Wall thickness: 1.0 mm
g) Extrusion condition

· Cylinder screw diameter = 30 mm, a single-screw extruder of LID = 22
Set temperature of extruder: barrel section C-1 (330°C), barrel section C-2 (365°C), barrel section C-3 (380°C), head section H-1 (380°C), die section D-1 (390°C), die section D-2 (390°C)
The obtained tube was observed and evaluated according to the following criteria. The appearance of the tube was visually checked.

Good: good appearance
Poor: poor appearance, e.g., the cross section is not circular by being flat or having uneven thickness

(Dielectric loss tangent)

By melt forming the pellets, a cylindrical test piece of 2 mm in diameter was prepared. The prepared test piece was set in a cavity resonator for 6 GHz, manufactured by Kanto Electronic Application and Development Inc., and the dielectric loss tangent was measured by a network analyzer, manufactured by Agilent Technologies Inc. By analyzing the measurement result by analysis software "CPMA", manufactured by Kanto Electronic Application and Development Inc., on PC connected to the network analyzer, the dielectric loss tangent (tan6) at 20°C at 6 GHz was determined.

[Table 4]

Table 4

| | 150°C Storage elastic modulus (MPa) | Amount of recovery (mm) | 150°C Seal pressure (MPa) | Water vapor permeability (g·cm/m²) | Injection moldability | Electrolytic solution immersion test — Amount of fluorine ions dissolving out (ppm by mass) | Metal mold corrosion test HPM38 (Cr-plated) | HPM38 (Ni-plated) | Electric wire coating property Variation in outer diameter | Core wire corrosion | Toner release test Non-stickiness | Amount of abrasion (mg) | Nitrogen permeability coefficient cm³·mm /(m²·24 h·atm) | Electrolytic solution permeability (g·cm/m²) | Ethyl acetate permeability (g·cm/m²) | Rate of deflection at 110°C under load (%) | 240°C Tensile creep strain (%) | 60,000-Time tensile strength retention rate (%) | Ozone exposure test 150 days | Tube moldability | Dielectric tangent |
|---|---|---|---|---|---|---|---|---|---|---|---|---|---|---|---|---|---|---|---|---|---|
| Example 1 | 94 | 0.031 | 0.97 | 12.1 | 1 | 0.6 | Good | Good | ±1% | Good | Good | 13.7 | 313 | 7.7 | 6.8 | 71% | 1.53 | 94.0% | Good | Good | 0.00038 |
| Example 2 | 87 | 0.027 | 0.78 | 12.0 | 2 | 0.6 | Good | Good | ±1% | Good | Good | 14.4 | 318 | 7.7 | 6.9 | 71% | 1.80 | 94.5% | Good | - | 0.00045 |
| Example 3 | 84 | 0.026 | 0.73 | 12.2 | 3 | 0.6 | Good | Good | ±1% | Good | Good | 14.6 | 314 | 7.4 | 6.7 | 71% | 1.98 | 95.7% | Good | - | 0.00039 |
| Example 4 | 80 | 0.023 | 0.61 | 12.6 | 3 | 0.6 | Good | Good | ±1% | Good | Good | 15.2 | 315 | 7.3 | 6.6 | 71% | 2.21 | 97.3% | Good | - | 0.00039 |
| Comparative Example 1 | 118 | 0.033 | 1.30 | 10.0 | 3 | 0.6 | Good | Good | ±1% | Good | Good | 17.0 | 272 | 7.0 | 6.8 | 66% | 1.50 | 91.5% | Poor | - | 0.00036 |
| Comparative Example 2 | 110 | 0.034 | 1.25 | 11.0 | 1 | 0.6 | Good | Good | ±1% | Good | Good | 14.7 | 296 | 7.4 | 6.9 | 69% | 1.38 | 91.9% | Poor | - | 0.00037 |
| Comparative Example 3 | 68 | 0.030 | 0.68 | 14.2 | 0 | 0.6 | Good | Good | Poor | Good | Good | 11.8 | 355 | 8.4 | 7.0 | 76% | 1.24 | 93.0% | Good | - | 0.00039 |
| Comparative Example 4 | 81 | 0.022 | 0.59 | 12.5 | 3 | 1.4 | Poor | Poor | ±1% | Poor | Poor | 14.8 | 346 | 8.4 | 7.4 | 71% | 2.55 | 96.4% | Poor | - | 0.00082 |
| Comparative Example 5 | 103 | 0.028 | 0.96 | 10.6 | 3 | 0.6 | Good | Good | ±2% | Good | Good | 17.1 | 286 | 7.0 | 6.7 | 68% | 1.84 | 93.5% | Poor | - | 0.00038 |
| Comparative Example 6 | 68 | 0.023 | 0.52 | 14.5 | 3 | 0.6 | Good | Good | ±1% | Good | Good | 12.6 | 350 | 7.9 | 6.7 | 75% | 2.06 | 98.2% | Good | - | 0.00040 |

**Claims**

1.  A copolymer, comprising tetrafluoroethylene unit and perfluoro(propyl vinyl ether) unit,

    wherein the copolymer has a content of perfluoro(propyl vinyl ether) unit of 3.9 to 4.9% by mass with respect to the whole of the monomer units,
    a melt flow rate at 372°C of 4.0 to 9.0 g/10 min, and
    the number of functional groups of 40 or less per $10^6$ main-chain carbon atoms.

2.  The copolymer according to claim 1, wherein the copolymer has a melt flow rate at 372°C of 5.0 to 9.0 g/10 min.

3.  An injection molded article, comprising the copolymer according to claim 1 or 2.

4.  A coated electric wire, comprising a coating layer comprising the copolymer according to claim 1 or 2.

5.  A formed article, comprising the copolymer according to claim 1 or 2, wherein the formed article is a joint, a film, a bottle, a gasket, an electric wire coating, or a tube.

## INTERNATIONAL SEARCH REPORT

International application No.

**PCT/JP2022/003634**

### A. CLASSIFICATION OF SUBJECT MATTER

*C08F 8/00*(2006.01)i; *C08F 214/26*(2006.01)i; *H01B 7/02*(2006.01)i
FI:   C08F8/00; H01B7/02 Z; C08F214/26

According to International Patent Classification (IPC) or to both national classification and IPC

### B. FIELDS SEARCHED

Minimum documentation searched (classification system followed by classification symbols)

C08F

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 3-184209 A (E. I. DU PONT DE NEMOURS & CO.) 12 August 1991 (1991-08-12) claims, page 3, upper right column, example 2 | 1-5 |
| X | JP 10-87746 A (ASAHI GLASS CO., LTD.) 07 April 1998 (1998-04-07) claims, paragraphs [0001], [0002], [0016], examples | 1-5 |
| X | JP 2020-100843 A (CHEMOURS-MITSUI FLUOROPRODUCTS CO., LTD.) 02 July 2020 (2020-07-02) claims, paragraphs [0031], [0032], examples | 1-5 |

☐ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **04 April 2022** | **19 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**_PCT/JP2022/003634_**

| Patent document cited in search report | | | Publication date (day/month/year) | Patent family member(s) | Publication date (day/month/year) |
|---|---|---|---|---|---|
| JP | 3-184209 | A | 12 August 1991 | EP 423995 A1 claims, page 3, lines 4-13, example 2 | |
| JP | 10-87746 | A | 07 April 1998 | (Family: none) | |
| JP | 2020-100843 | A | 02 July 2020 | (Family: none) | |

Form PCT/ISA/210 (patent family annex) (January 2015)

**EP 4 299 600 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003048214 A

- WO 2003534940 A